# EUROPÄISCHE PATENTANMELDUNG

(11) **EP 4 488 055 A1**
(43) Veröffentlichungstag der Anmeldung: **08.01.2025**
(21) Anmeldenummer: 24186287.9
(22) Anmeldetag: 03.07.2024
(51) Int. Cl.: B32B 5/02, B32B 5/18, B32B 5/24, B32B 7/12, B32B 13/02, B32B 13/14, B32B 27/30, E01B 1/00, E01B 3/28, E01B 3/46

(54) **UNTERLAGE FÜR EINEN BAHNSCHWELLEN-BETONKÖRPER UND HERSTELLUNGSVERFAHREN**

(30) Priorität: 07.07.2023 DE 102023118043
(71) Anmelder: Gärlich, Johanna Sophie, 04158 Leipzig (DE)
(72) Erfinder: Gärlich, Johanna Sophie, 04158 Leipzig (DE)
(74) Vertreter: dompatent von Kreisler Selting Werner - Partnerschaft von Patent- und Rechtsanwälten mbB

(57) **Zusammenfassung**

Die Erfindung betrifft eine Unterlage für einen Bahnschwellen-Betonkörper (12), der mit einer elastischen Kunststoffschicht aus einem Kunststoffgemisch aus einem thermoplastischen Elastomer und einem Thermoplast versehen ist, wobei der Anteil des Thermoplasts 5 Gew.-% bis 95 Gew.-% der Kunststoffschicht beträgt. Außerdem betrifft die Erfindung ein Verfahren zur Herstellung einer Unterlage für einen Bahnschwellen-Betonkörper (12), wobei bei dem Verfahren ein Kunststoffgemisch zur Herstellung einer Kunststoffschicht (14) mittels eines Extruders extrudiert wird und wobei das Kunststoffgemisch aus einem thermoplastischen Elastomer und einem Thermoplast besteht und der Gewichtsanteil des Thermoplasts 5 Gew.-% bis 95 Gew.-% des Kunststoffgemisches beträgt.

## Beschreibung

Die Erfindung betrifft eine Unterlage für einen Bahnschwellen-Betonkörper und ein Verfahren zu seiner Herstellung.

Bahnschwellen aus Spannbeton, Beton oder Stahl sind unterseitig mit Unterlagen (Besohlungen) versehen, mit denen die schotterschonenden Eigenschaften einer Holzschwelle nachempfunden werden. Diese Unterlagen weisen elastische Eigenschaften auf und werden beim Betonieren des Bahnschwellenkörpers während des Fertigungsprozesses aufgelegt oder an den hergestellten Bahnschwellen-Betonkörper nachträglich an dessen Unterseite angeklebt.

Aus DE-A-10 2020 115 509 ist eine Schwellenbesohlung für ein Betonbauteil bekannt, die aus einem Faserrezyklat-Material besteht oder dieses umfasst, wobei das Faserrezyklat-Material Textilfasern und Gummigranulat-Material aufweist und die Textilfasern zumindest teilweise und/oder zumindest bereichsweise in dem Gummigranulat-Material gebunden sind.

Eine Schwellensohle für eine Eisenbahnschwelle mit elastischer Schicht und von dieser gehaltenen Wirrfasern ist aus WO-A-2009/108972 bekannt. Eine synthetischer Verbundwerkstoff für Schwellen ist aus DE-T-699 38 308 bekannt. Schließlich zeigt WO-A-2008/101269 eine Schwellenbesohlung aus einem Kunststoffschaummaterial.

Aufgabe der Erfindung ist es, die Herstellung derartiger Unterlagen für Bahnschwellen-Betonkörper ökonomisch und ökologisch zu verbessern.

Zur Lösung dieser Aufgabe wird mit der Erfindung eine Unterlage für einen Bahnschwellen-Betonkörper vorgeschlagen, die versehen ist mit einer elastischen Kunststoffschicht aus einem Kunststoffgemisch aus einem thermoplastischen Elastomer und einem Thermoplast, wobei der Anteil des Thermoplasts 5 Gew.-% bis 95 Gew.-% der Kunststoffschicht beträgt.

Nach der Erfindung ist also vorgesehen, dem thermoplastischen Elastomer der elastischen Kunststoffschicht der Unterlage einen Thermoplast beizumischen, bei dem es sich um ein Regranulat, also um recyceltes Material handelt. Erfindungsgemäß beträgt der Gewichtsanteil des Regranulats 5 Gew.-% bis 95 Gew.-% der Kunststoffschicht, so dass umgekehrt der Anteil an thermoplastischem Elastomer zwischen 95 Gew.-% und 5 Gew.-% liegen kann.

Erfindungsgemäß wird für die elastische Kunststoffschicht der Unterlage für den Bahnschwellen-Betonkörper ein Kunststoffgemisch eingesetzt, das aus einem thermoplastischen Elastomer und einem Thermoplast besteht. Weitere Bestandteile weist das Kunststoffgemisch vorzugsweise nicht auf.

Das erfindungsgemäße Kunststoffgemisch besteht zu mindestens 5 Gew.-% und zu höchstens 95 Gew.-% aus einem Thermoplast, womit der Anteil an thermoplastischem Elastomer entsprechend höchstens 95 Gew.-% und mindestens 5 Gew.-% beträgt. Als besonders geeignet hat sich ein Gewichtsprozentbereich von 40-70 an Thermoplast und dementsprechend 30-60 an thermoplastischem Elastomer herausgestellt. Ideal umfasst das Kunststoffgemisch 65-75 Gew.-% an Thermoplast und dementsprechend 35-25 Gew.-% an thermoplastischem Elastomer.

Der erfindungsgemäße Ansatz erlaubt es, die Schwellenbesohlung zu einem ganz überwiegenden Anteil aus Thermoplast-Regranulat also aus recyceltem Material herzustellen.

Eine weitere Besonderheit der Erfindung ist es, dass ausschließlich physikalisch gebundene Kunststoffmaterialien, nämlich thermoplastisches Elastomer und Thermoplast eingesetzt werden. Anders als beispielsweise chemisch gebundenes Material, das beispielsweise in Form der Gummigranulate bei der Besohlung nach DE-A-10 2020 115 509 eingesetzt wird, lässt sich die erfindungsgemäße Bahnschwellenbesohlung vollständig recyceln, und zwar auf einfache Art und Weise durch Aufschmelzen. Gummi ist zwar ein elastomeres Material, das anders als das erfindungsgemäß eingesetzte physikalisch gebundene Material chemisch gebunden ist. Damit lässt sich Gummi nicht aufschmelzen.

In vorteilhafter Weiterbildung der Erfindung ist vorgesehen, dass das Kunststoffgemisch geschlossenzellig geschäumt ist, wobei sich in den Zellen ein Gas befindet, bei dem es sich vorteilhafterweise um N₂ oder CO₂ handelt.

Durch die Einbringung eines Gases in das plastifizierte Kunststoffgemisch, beispielsweise in den Extruder zur Herstellung der elastischen Kunststoffschicht erfolgt das Schäumen physikalisch. Diesbezügliche bekannte Verfahren sind unter den Begriffen MuCell und ProForm bekannt.

Es entstehen bei diesen Prozessen ellipsoide Poren ohne Innenverhautung, wobei die Poren ungerichtet angeordnet sind, also eine zufällige Lage innerhalb der elastischen Kunststoffschicht aufweisen.

Als thermoplastisches Elastomer eignet sich mit Vorteil EVA, während als Thermoplast bevorzugt PE (in einer seiner Formen als PE-LD, PE-LLD, PE-MD oder PE-HD) oder PP verwendet wird.

In weiterer vorteilhafter Ausgestaltung der Erfindung kann auf der Kunststoffschicht eine Wirrfaserschicht mit Fasern angeordnet sein, die in die Kunststoffschicht eingebettet oder mit der Kunststoffschicht verklebt, verschweißt oder auf andere Weise fest verbunden sind, und mit Fasern zum Einbringen in den Beton des Bahnschwellen-Betonkörpers vor dessen Aushärtung.

Das erfindungsgemäße Verfahren zur Herstellung einer Unterlage für einen Bahnschwellen-Betonkörper zeichnet sich dadurch aus,
- dass ein Kunststoffgemisch zur Herstellung einer Kunststoffschicht mittels eines Extruders extrudiert wird,
- wobei das Kunststoffgemisch aus einem thermoplastischen Elastomer und einem Thermoplast besteht und der Gewichtsanteil des Thermoplasts 5 Gew.-% bis 95 Gew.-% des Kunststoffgemisches beträgt.

In vorteilhafter Ausgestaltung der Erfindung wird bei dem Verfahren zur Schäumung des Extrudats in den Extruder ein Gas, insbesondere N2 oder CO2 eingeleitet.

In weiterer vorteilhafter Ausgestaltung der Erfindung kann vorgesehen sein, dass das Gas zusammen mit dem Kunststoffgemisch in den Extruder eingeleitet wird oder dass das Gas in die Schmelze innerhalb des Extruders eingeleitet wird.

Diesbezügliche bekannte Verfahren sind als physikalische Verfahren unter den Begriffen MuCell und ProForm bekannt. Man kann zum Schäumen aber auch chemische Verfahren einsetzen.

Gemäß einer vorteilhaften Ausgestaltung der Erfindung weist die Unterlage eine Wirrfaserschicht auf, die in das Extrudat vor dessen Aushärtung eingedrückt wird und die die Oberseite der Kunststoffschicht bildet.

Die Erfindung betrifft also die Materialkomposition von Elastomeren und deren Herstellung für die Verwendung als Schwellensohlen für Gleis- und Weichenschwellen. Das thermoplastische Elastomer wird im Gegensatz zu bekannten Materialmischungen durch den Einsatz von Thermoplast-Regranulat die Menge an thermoplastischem Elastomer reduziert, was die COz-Emission für die Materialien und die Herstellung der Schwellensohle auf unter 50 % der bekannten Schwellsohlen verringert, wobei vorteilhafterweise durch die Verwendung natürlicher Gase (z.B. Stickstoff oder COz) eine Verschäumung der elastischen Kunststoffschicht optimiert werden kann.

Wie bereits oben erwähnt, werden Sohlen für Betonschwellen zur Schotterschonung verwendet. Diese Unterlagen sorgen aber auch für eine Schwingungsdämpfung und eine Verbesserung des Querverschiebewiderstandes. Sie lassen sich in erster Linie bei Bahnschwellen-Betonkörpersn und Stahlschwellen einsetzen, nicht zuletzt aber auch bei Holzschwellen oder Kunststoffschwellen.

Typische Schwellenbesohlungen weisen eine Dicke von bis zu 25 mm auf und sind oberseitig mit einer Schicht versehen, die den Verbund zur Bahnschwelle ermöglichen. Dies kann durch Klebstoff oder bevorzugt durch Wirrfaser, wie beispielsweise Geotextil, realisiert werden. Die Fasern der Wirrfaserschicht sind einerseits in die elastische Kunststoffschicht der Unterlage eingebettet oder mit dieser verschweißt und andererseits, nämlich im Falle von Bahnschwellen-Betonkörpern, in den Beton eingebettet, wozu sie nach dem Gießen des Bahnschwellen-Betonkörpers in den noch fließfähigen Beton "eingerüttelt" werden. Beispiele für derartige Herstellungstechnologien sind in EP 1 298 252 B1 und EP 2 545 219 B1 beschrieben.

Beim Stand der Technik sind als Material für die Schwellensohlen unterschiedliche Kompositionen und Basisstrukturen als Elastomer bekannt. Die Mehrzahl der bekannten zur Anwendung kommenden Materialien sind nicht oder nur bedingt recyclinggeeignet und verursachen bei der Herstellung und/oder Verarbeitung eine unverhältnismäßige hohe CO₂ - Emission.

Mit der Erfindung werden also die COz-Emissionen für die Materialien und die Herstellung der elastischen Kunststoffschicht (Schwellenbesohlung) wirksam reduziert. Hierzu werden Anteile der Basismaterialien (thermoplastisches Elastomer und Thermoplast) durch den Einsatz von Stoffen geringerer COz-Emission ersetzt und für die gegebenenfalls vorgesehene Verschäumung werden keine industriell verfügbaren Schäumungsmittel verwendet. Diese werden durch natürlich vorkommende atmosphärisch unbegrenzt verfügbarer Gase wie z.B. Stickstoff oder COz substituiert. Die verfügbaren Gase dieser Kategorie verursachen in der Abspaltung, Aufbereitung und Kompression vorteilhafterweise eine weit geringere COz-Emission.

Als Basismaterial kommt beispielsweise ein in bekannten Verfahren verwendetes EVA zur Anwendung. Diese Basismaterialien werden in den bekannten Verfahren u.a. durch Zugabe von Additiven in der Elastizität, im Schwingungsverhalten, der Eigenfrequenz, der Farbe und anderen Eigenschaften modifiziert. Es sind keine Verfahren bekannt oder in Anwendung, mit denen die COz-Emission in der Herstellung von Schwellensohlen umweltwirksam reduziert wird. Bei der Verwendung von EVA liegt die COz-Emission z.B. je Schwellenbesohlung über 2,0 kg. Als weitere COz-Emissionsquelle muss die Schäumung des Sohlenmaterials angesehen werden. Hier kommen Schäumungsmittel zum Einsatz, deren Herstellung neben COz-Emissionen auch andere umweltrelevante Nachteile aufzeigen.

Eine weitere Zielstellung der Erfindung ist das cradle-to-cradle-Prinzip, wonach die eingesetzten Materialien in einem endlosen Stoffkreislauf ohne Abfälle zirkulieren. Das Prinzip der Linearwirtschaft bei allen bekannten Verfahren soll damit erfindungsgemäß ebenfalls durchbrochen werden.

Mit den erfindungsgemäß hergestellten Schwellenbesohlungen kann es den Nutzern gelingen, die in den Gleisen verarbeiteten Materialien über Generationen aus ausgedienten Produkten wieder als Rohstoff für vergleichbare Produkte zu verwenden. Diese Zielstellung erfordert jedoch eine erfindungsgemäße Verwendung ausschließlich umwelttechnisch und gesundheitlich unbedenklicher Materialien.

Die elastische Kunststoffschicht der Schwellenbesohlung besteht danach erfindungsgemäß aus einer extrudierfähigen Mischung von Materialen, die die vorgenannten Bedingungen uneingeschränkt erfüllen. Die Anspruchskriterien für Zulassungen durch die Anwender wie z.B. DB AG und andere Europäische Bahngesellschaften werden als Voraussetzung der erfindungsgemäßen Elastomereigenschaften vorausgesetzt und hier nicht wiederholt.

Als Basisvariante für die Materialkomposition der elastischen Kunststoffschicht wird zweckmäßigerweise ein ungeschäumtes thermoplastisches Elastomer erfindungsgemäß durch die Verwendung definierter EVA-Anteile angenommen. Dieser EVA-Anteil beträgt erfindungsgemäß weniger bzw. weitaus weniger als 100 Gew.-%. Als Additiv in Form eines Thermoplasts zur erfindungsgemäß vorgesehenen COz-Emissionsminderung werden je nach Zielsetzung der Sohleneigenschaften und der zu erwartenden bzw. zu reduzierenden CO2-Emissionen 5 Gew.-% bis 95 Gew.-% an Thermoplast-Regranulat beigemischt. Dieses steht als nahezu COz-emissionsfreies Produkt in ausreichenden Mengen kommerziell als Recyclat zur Verfügung. Die Beimischung zum EVA kann in Anteilen von weniger als 30 % bis über 50 % erfolgen. Die Anteile im Gemisch sind verfahrenstechnisch von den Extrudionsanlagen, der Sohlendicke, der erforderlichen Mischtemperatur beider Komponenten und dem ggf. anforderungsgerechten Schaumgehalt im Zielelastomer abhängig.

Die Schäumung des Elastomers erfolgt erfindungsgemäß nicht durch Beigabe bekannter Schäumungsmittel in der Materialzuführung, sondern physikalisch durch Gasinjektion im für die Herstellung der elastischen Kunststoffschicht verwendeten Extruder. Hierbei wird in einem Bereich des Extruders, in dem die Viskosität des Materialgemischs temperaturbedingt für das Schäumungsgas aufnahmefähig ist, das Gas injiziert. Als Gas kommen hierbei vorkomprimiertes CO₂ oder Stickstoff zur Anwendung.

Beide Gase haben gegenüber bekannten Schäumungsmitteln den Vorteil, dass sie keine innenverhauteten kugelförmigen Microzellen, sondern in der Form nicht definierbare verhautungsfreie Ellipsoide bilden. Die fehlende Innenverhautung gewährleistet von Anbeginn der Nutzung eine gleichbleibende Elastizität. Die Innenverhautungen von Schäumungszellen brechen bei bekannten Verfahren im Verlaufe der Nutzung und verändern damit die Konstanz der Elastizität. Die Ellipsoidenform mit inhomogener Lage der Zellenachsen gewährleisten gegenüber der Zellenform bei Verwendung von gebräuchlichen Schäumungsmitteln eine in mehreren Achsen zufällige Elastizität in den vordefinierbaren Dimensionen.

Das Sohlenmaterial (elastische Kunststoffschicht) erhält mit den vorgenannten erfindungsgemäßen Maßnahmen definierbare und dauerhafte plastische, elastische und viskoelastische Eigenschaften bei einer vorgabegemäßen Minimierung der COz-Emission und der Möglichkeit der Anwendung des cradle-to-cradle-Prinzips.

Die wesentlichen Merkmale der Erfindung sind:
- Verwendung von Thermoplast-Regranulat, insbesondere PE-Recyclat mit einem Anteil von 5 Gew.-% bis 90 Gew.-% als Additiv zu einem thermoplastischen Elastomer, insbesondere EVA, bei der Herstellung von Schwellenbesohlungen zur Reduzierung der COz-Emission.
- Herstellung von Schwellensohlen, bei denen der Anteil an Thermoplast-Regranulat, insbesondere PE-Regranulat als Additiv größer als 5 Gew.-% und kleiner als 95 Gew.-% des Materials für die elastische Kunststoffschicht ist.
- Herstellung von Schwellensohlen, wobei das Sohlenmaterial (elastische Kunststoffschicht) im Extruder durch Zugabe von Stickstoff oder COzderart verschäumt wird, dass hierdurch geschlossenporige ellipsoide Poren ohne Innenverhautung entstehen.
- Herstellung von Schwellensohlen, wobei die Poren nicht gerichtet sind, sondern eine zufällige Lage innerhalb der elastischen Kunststoffschicht haben.
- Herstellung von Schwellensohlen mit einer kreislauffähigen Materialzusammensetzung, die nach dem cradle-to-cradle-Prinzip einen endlosen (circularen) Stoffkreislauf ermöglicht und nach dem Ende ihrer Nutzungszeit zurückgenommen und vollständig in die Produktion von Schwellensohlen oder ähnlichen Bauteilen / Produkten rückgeführt werden können.
- Herstellung von Schwellensohlen, bei denen zur Verschäumung des Extrudats injiziertes N₂ oder COz die elastischen und plastischen Sohleneigenschaften derart veränderbar ist, dass durch eine höhere Eindringung des Gleisschotters die Auflager- bzw. Kontaktfläche vergrößert wird und als Folge die spezifische Schotterpressung reduziert wird.

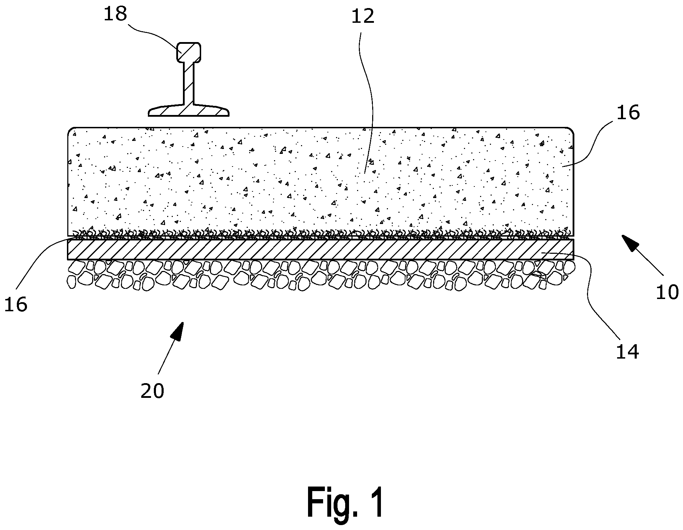

Die Erfindung wird nachfolgend anhand der Zeichnung näher erläutert.

Analog zu den bekannten Systemen werden die Sohlen 10 beim Betonieren der Betonschwellen 12 auf den feuchten Frischbeton aufgelegt. Sie verbinden sich mechanisch mit dem Frischbeton der Betonschwelle 12 aufgrund eines auf die Fasern wirkenden Hydratationssogs oder durch Einrütteln.

Die Sohle 10 besteht z.B. aus einer 3 mm bis 25 mm starken elastischen Kunststoffschicht 14 (aus den oben beschriebenen thermoplastischen Elastomer- und den Thermoplast-Materialien) mit einer definierten Elastizität von z.B. 200 kN/mm. Beim Austritt der Kunststofflage aus dem Extruder (in den zur physikalischen Schäumung mit Vorteil ein Gas, insbesondere N₂ oder COz eingebracht wird) wird im noch thermisch bedingt plastischen Zustand eine Kunststoff-Wirrfaserschicht 16 auf die Kunststoffschicht 14 aufgelegt und mit dieser fertigungsintern unter Ausnutzung der noch nicht erhärteten Konsistenz des Kunststoffs verschweißt. Statt einer einlagigen Kunststoffschicht 14 kann diese auch mehrlagig ausgebildet sein. Die Verschweißung der Fasern der Wirrfaserschicht 16 mit der Kunststoffschicht 14 sowie die Einbettung der Fasern in der Betonschwelle 12 sind in der schematischen Zeichnung nicht dargestellt.

Die hierbei entstehende Platte besteht danach aus einer unterseitigen elastischen Kunststoffplatte und einer oberseitigen mit dieser kraftschlüssig verschweißten Wirrfaserschicht 16. Die Dicke der Wirrfaserschicht 16 beträgt z.B. ca. 3 mm bis 10 mm. Im eingebauten Zustand liegt die die Schienen 18 tragende Betonschwelle 12 auf einem Schotterbett 20.

Die hier beschriebene Verbundplatte (mindestens eine elastische Kunststoffschicht und Wirrfaserschicht) wird in diesem Ausführungsbeispiel als Beschichtung der Unterseite einer Beton-Bahnschwelle ausgeführt sein. Bei der Bahnschwelle kann es sich um eine Spannbeton-Bahnschwelle oder um eine schlaff bewehrte Beton-Bahnschwelle handeln. Die Bahnschwelle mit Verbundplatte kann für abzweigungs- oder kreuzungsfreie Gleisabschnitte oder für Weichen, Kreuzungen oder Kreuzungsweiche eingesetzt werden.

Vorteilhaft im Zusammenhang mit der Erfindung ist die Verwendung von PE-Regranulat der verschiedenen Sorten. PE ist aktuell im Handel erhältlich zu Kosten von ca. 2,00 €/kg, während PE-Regranulat lediglich ca. 0,75 €/kg kostet. Die Kosten für beispielsweise EVA liegen bei ca. 2,50 €/kg. Somit lassen sich die Kosten für die Materialien und die Herstellung einer Schwellsohle halbieren.

Um eine gute Homogenität der Polymermischung zu erhalten ist eine Verarbeitungstemperatur von mindestens 170 °C und eine gute Vermischung der beiden Komponenten auf der Extruderschnecke nötig. Dadurch werden hohe mechanische Eigenschaften und gute Dauergebrauchseigenschaften wie Zugfestigkeit, Reisdehnung , Alterungsbeständigkeit , Ozonbeständigkeit, Witterungsbeständigkeit, Ölbeständigkeit sowie Kältebruchbeständigkeit (bis minus 30 °C) erreicht. Die Dauerschwellfestigkeit bei 10 Mio. Lastwechseln ist ebenfalls gegeben, wie Versuche gezeigt haben. Dies überrascht, da normalerweise PE-EVA-Mischungen (sogenannte Polymerblends) für hohe mechanische Wechselbelastungen unter erschwerten Umweltbedingungen nicht geeignet sind, da sie aus unterschiedlichen Werkstoffen zusammengesetzt sind. Insbesondere durch die physikalische Schäumung lassen sich hier die zuvor beschriebenen Verbesserungen realisieren.

### BEZUGSZEICHENLISTE

- 10: Sohlen
- 12: Betonschwellen
- 14: elastische Kunststoffschicht
- 16: Wirrfaserschicht
- 18: Schienen
- 20: Schotterbett

## Patentansprüche

1. Unterlage für einen Bahnschwellen-Betonkörper mit
- einer elastischen Kunststoffschicht (14) aus einem Kunststoffgemisch aus einem thermoplastischen Elastomer und einem Thermoplast, wobei der Anteil des Thermoplasts 5 Gew.-% bis 95 Gew.-% der Kunststoffschicht (14) beträgt.

2. Unterlage nach Anspruch 1, **dadurch gekennzeichnet, dass** das Kunststoffgemisch geschlossenzellig geschäumt ist, wobei sich in den Zellen ein Gas befindet.

3. Unterlage nach Anspruch 2, **dadurch gekennzeichnet, dass** es sich bei dem Gas um N₂ oder CO₂ handelt.

4. Unterlage nach einem der Ansprüchen 1 bis 3, **dadurch gekennzeichnet, dass** als thermoplastisches Elastomer EVA und/oder als Thermoplast PE, insbesondere PE-LD, PE-LLD, PE-MD, PE-HD oder PP verwendet wird.

5. Unterlage nach einem der Ansprüchen 1 bis 4 **gekennzeichnet durch** eine auf der Kunststoffschicht (14) angeordnete Wirrfaserschicht (16) mit Fasern, die in die Kunststoffschicht (14) eingebettet oder mit der Kunststoffschicht (14) verklebt, verschweißt oder auf andere Weise fest verbunden sind, und mit Fasern zum Einbringen in den Beton des Bahnschwellen-Betonkörpers vor dessen Aushärtung.

6. Verfahren zur Herstellung einer Unterlage für einen Bahnschwellen-Betonkörper, wobei bei dem Verfahren
- ein Kunststoffgemisch zur Herstellung einer Kunststoffschicht (14) mittels eines Extruders extrudiert wird,
- wobei das Kunststoffgemisch aus einem thermoplastischen Elastomer und einem Thermoplast besteht und der Gewichtsanteil des Thermoplasts 5 Gew.-% bis 95 Gew.-% des Kunststoffgemisches beträgt.

7. Verfahren nach Anspruch 6, **dadurch gekennzeichnet, dass** zur Schäumung des Extrudats in den Extruder ein Gas, insbesondere N₂ oder CO₂ eingeleitet wird.

8. Verfahren nach Anspruch 7, **dadurch gekennzeichnet, dass** das Gas zusammen mit dem Kunststoffgemisch in den Extruder eingeleitet wird oder dass das Gas in die Schmelze innerhalb des Extruders eingeleitet wird.

9. Verfahren nach einem der Ansprüche 6 bis 8 **gekennzeichnet durch** eine Wirrfaserschicht (16), die in das Extrudat vor dessen Aushärtung eingedrückt wird und die die Oberseite der Kunststoffschicht (14) bildet.

10. Verfahren nach einem der Ansprüche 6 bis 9, **dadurch gekennzeichnet, dass** als thermoplastisches Elastomer EVA und/oder als Thermoplast PE, insbesondere PE-LD, PE-LLD, PE-MD, PE-HD oder PP verwendet wird.
